# FASCICULE DE BREVET EUROPEEN

(11) **EP 1 614 930 B1**
(45) Date de publication et mention de la délivrance du brevet: **26.09.2007**
(21) Numéro de dépôt: 05291451.2
(22) Date de dépôt: 05.07.2005
(51) Int. Cl.: F16F 13/10, F16F 13/26

(54) **Support antivibratoire hydraulique à commande pneumatique**
Hydraulisches, schwingungsdämpfendes Lager mit pneumaticher Steuerung
Hydraulic antivibration support with pneumatic control

(30) Priorité: 07.07.2004 FR 0407544
(43) Date de publication de la demande: 11.01.2006
(73) Titulaire: HUTCHINSON, 75008 Paris (FR)
(72) Inventeur: Grassmuck, Volker, 69469 Weinheim (DE)
(74) Mandataire: Bérogin, Francis

(56) Documents cités:
- EP-A- 0 298 862
- EP-A- 0 984 193
- EP-A- 1 188 951
- EP-A- 1 249 636
- US-A- 4 383 679
- US-A- 5 267 726
- US-A1- 2001 026 038
- PATENT ABSTRACTS OF JAPAN vol. 013, no. 555 (M-904), 11 décembre 1989 (1989-12-11) -& JP 01 229132 A (TOKAI RUBBER IND LTD), 12 septembre 1989 (1989-09-12)

## Description

La présente invention est relative aux supports antivibratoires hydrauliques à commande pneumatique.

Plus particulièrement, l'invention concerne un support antivibratoire hydraulique destiné à être interposé aux fins d'amortissement entre des premier et deuxième éléments rigides, ce support antivibratoire comprenant :
- des première et deuxième armatures destinées à être fixées aux deux éléments rigides,
- une cloison rigide comprenant au moins une plaque,
- un corps en élastomère qui relie entre elles les deux armatures et qui délimite, avec la cloison, une chambre de travail remplie de liquide,
- des première et deuxième poches souples qui délimitent respectivement, avec ladite cloison, une chambre de compensation et une chambre hydraulique supplémentaire remplies de liquides, la chambre de compensation étant reliée à la chambre de travail par un premier passage étranglé rempli de liquide qui présente une première fréquence de résonance inférieure à 20 Hz, et la chambre hydraulique supplémentaire étant reliée à la chambre de travail par un deuxième passage étranglé qui présente une deuxième fréquence de résonance comprise entre 20 et 80 Hz,
- et un godet délimitant, avec ladite cloison, une chambre pneumatique formée autour de la deuxième poche souple.

Le document EP-A-0 984 193 décrit un exemple d'un tel support hydraulique, dans lequel le deuxième passage étranglé est formé dans l'épaisseur de la plaque susmentionnée; voir aussi le document EP 1188951 A2, qui décrit un support antivibratoire hydraulique selon le préambule de la revendication 1. Il en résulte, lorsqu'on souhaite obtenir ladite deuxième fréquence de résonance, une épaisseur importante de ladite plaque, d'où un poids élevé et un encombrement axial relativement important du support antivibratoire.

La présente invention a notamment pour but de pallier ces inconvénients.

A cet effet, selon l'invention, un support antivibratoire du genre en question est caractérisé en ce que ladite plaque est solidaire d'un tube s'étendant à l'intérieur de la deuxième poche souple et délimitant le deuxième passage étranglé, ledit tube étant entouré radialement par une paroi latérale du godet, une partie de la deuxième poche étant comprise entre le tube et ladite paroi latérale.

Grâce à ces dispositions, il n'est pas nécessaire d'avoir recours à une plaque épaisse pour obtenir un deuxième passage étranglé ayant la fréquence de résonance voulue. Il en résulte un gain de poids et d'encombrement en direction axiale (c'est-à-dire perpendiculairement à la plaque susmentionnée). De plus, on met à profit le volume de la chambre hydraulique supplémentaire pour y loger le tube qui délimite le deuxième passage étranglé, ce qui améliore encore la compacité du support dans la direction axiale..

Dans des modes de réalisation préférés de l'invention, on peut éventuellement avoir recours en outre à l'une et/ou à l'autre des dispositions suivantes :
- la cloison comporte en outre une coque annulaire qui présente une gorge délimitant le premier passage étranglé et fermée par ladite plaque vers la chambre de travail, le premier passage étranglé étant disposé radialement à l'extérieur du godet ;
- la chambre de compensation est disposée, au moins partiellement, radialement entre le godet et la coque annulaire ;
- les première et deuxième poches souples sont formées dans une même paroi souple; la paroi latérale du godet est en appui contre la paroi souple et applique localement cette paroi souple contre la cloison rigide en séparant ainsi la chambre de compensation et la chambre hydraulique supplémentaire ;
- le godet applique la paroi souple contre la plaque autour du tube ;
- le tube est formé d'une seule pièce avec la plaque ;
- le tube et la plaque sont formés en matière plastique ;
- le tube se prolonge à l'intérieur de la chambre de travail ;
- le tube se prolonge à l'intérieur de la chambre de travail en formant une collerette dans ladite chambre de travail, ladite collerette présentant une longueur axiale inférieure au dixième de la longueur axiale totale du tube ;
- le deuxième passage étranglé est majoritairement disposé à l'intérieur du godet ;
- ladite plaque est plane ;
- le godet est formé d'une seule pièce avec un couvercle rigide qui recouvre ladite paroi souple ;
- le deuxième passage étranglé s'étend sensiblement parallèlement à un axe central perpendiculaire à la plaque ;
- la chambre pneumatique est reliée à l'extérieur par un passage d'air.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un véhicule automobile dont le moteur est porté par au moins un support antivibratoire hydraulique,
- et la figure 2 est une vue en coupe verticale du support antivibratoire du véhicule de la figure 1, selon une première forme de réalisation de l'invention, dans un état de fonctionnement correspondant au régime de ralenti du moteur.

Sur les différentes figures, les mêmes références désignent des éléments identiques ou similaires.

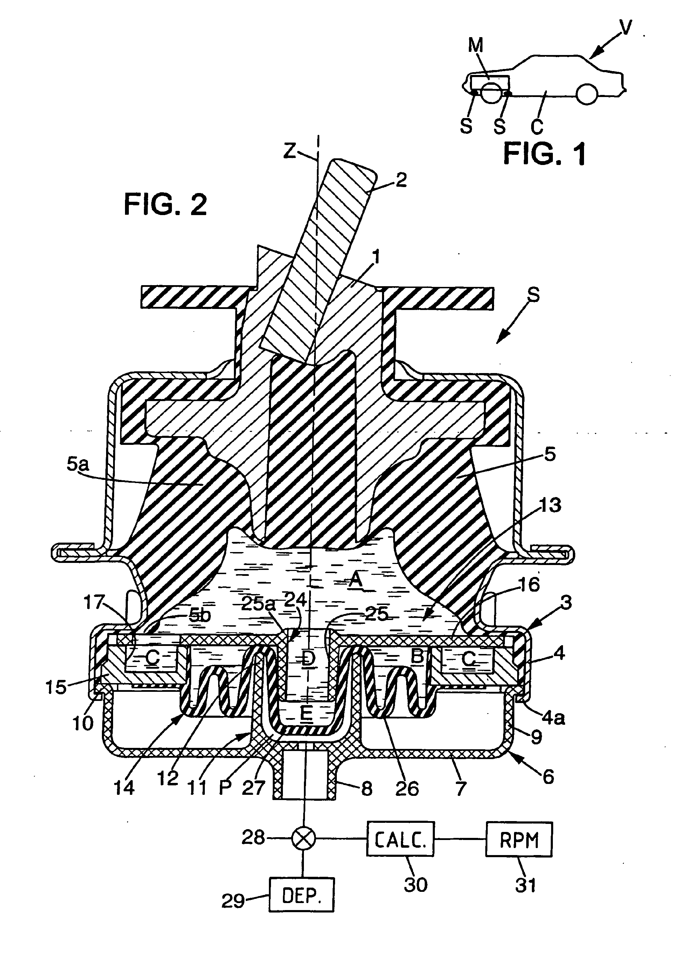

La figure 1 représente un véhicule automobile V dont la caisse C supporte un moteur M au moyen d'au moins un support antivibratoire hydraulique S tel que par exemple celui représenté sur la figure 2 pour une première forme de réalisation de l'invention.

Ce support antivibratoire S comporte :
- une première armature rigide 1 présentant la forme d'une embase métallique solidaire d'un goujon 2 qui est dirigé vers le haut selon un axe central vertical Z et qui est destiné à être fixé par exemple au moteur M du véhicule,
- une deuxième armature rigide 3, par exemple métallique, qui est destinée à être fixée par exemple à la caisse C du véhicule et qui comporte notamment une couronne 4,
- et un corps en élastomère 5 capable de supporter notamment les efforts statiques dus au poids du moteur M, ce corps en élastomère pouvant présenter par exemple une forme de cloche qui s'étend entre un sommet 5a surmoulé et adhérisé sur l'embase 1 et une base annulaire 5b surmoulée et adhérisée sur la couronne 4.

Par ailleurs, le support S comporte en outre un couvercle de protection inférieur 6, réalisé par exemple en métal ou le cas échéant en matière plastique.

Dans l'exemple représenté sur la figure 2, le couvercle 6 comporte un fond 7 sensiblement horizontal qui peut présenter, par exemple en son centre, un raccord pneumatique 8, et qui est prolongé vers le haut par une paroi latérale 9 terminée par une bride extérieure 10 annulaire ou non.

Le couvercle 6 forme également, en correspondance avec le raccord pneumatique 8, un godet 11 qui présente une paroi latérale annulaire 12 s'étendant vers le haut à partir du fond 7 et qui délimite intérieurement une chambre pneumatique P communicant avec le raccord pneumatique 8 susmentionné.

Par ailleurs, la deuxième armature 3 est solidaire d'une cloison rigide 13, qui s'étend perpendiculairement à l'axe Z et qui est serrée entre la base 5b du corps en élastomère 5 et la bride 10 du couvercle 6.

Cette cloison rigide délimite, avec le corps en élastomère 5, une chambre de travail hydraulique A remplie de liquide. De plus, à l'opposé de la chambre de travail A, la cloison rigide 13 délimite, avec une fine paroi souple 14 qui peut être réalisée notamment en élastomère, une chambre de compensation hydraulique annulaire B et une chambre hydraulique supplémentaire E située au centre de la chambre de compensation B.

La périphérie de la paroi souple 14 est solidarisée à la cloison rigide 13, par exemple par surmoulage et adhérisation sur ladite cloison rigide, et/ou par pincement entre la cloison rigide 13 et le bord annulaire supérieur de la paroi 9 du godet.

La chambre de compensation B est remplie de liquide et communique avec la chambre de travail A par un premier passage étranglé C lui-même rempli de liquide, qui est délimité par exemple à l'intérieur de la cloison 13 et qui est dimensionné pour présenter une fréquence de résonance inférieure par exemple à 20 Hz. La chambre hydraulique supplémentaire E, quant à elle, est également remplie de liquide et communique avec la chambre de travail A par un deuxième passage étranglé D lui-même rempli de liquide, qui peut être par exemple un passage cylindrique s'étendant selon l'axe vertical Z, et qui peut être dimensionné pour présenter une fréquence de résonance comprise par exemple entre 20 et 80 Hz.

Dans l'exemple représenté sur la figure 2, la cloison rigide 13 comprend :
- une coque annulaire évidée 15, réalisée par exemple en alliage léger ou en matière plastique,
- et une mince plaque plane 16 en matière plastique ou le cas échéant en métal, d'épaisseur par exemple comprise entre 4 et 6 mm, qui recouvre la coque 15 vers la chambre de travail A et peut être fixée à ladite coque par sertissage, par appui de la base 5b du corps en élastomère, ou autre.

Dans cet exemple, la coque annulaire 15 présente, à sa périphérie extérieure, une gorge 17 ouverte vers le haut, qui délimite le premier passage étranglé C. Ce premier passage étranglé C communique d'une part, avec la chambre de travail A par un évidement 18 ménagé dans la plaque 16, et d'autre part, avec la chambre de compensation B par un évidement ménagé dans la cloison 15 (non représenté).

La plaque 16 délimite en son contre un ajutage 24, s'étendant avantageusement selon l'axe central Z, qui délimite le deuxième passage étranglé D susmentionné. Cet ajutage 24 est formé à l'intérieur d'un tube 25 solidaire de la plaque 16, lequel tube peut être formé d'une seule pièce avec cette plaque. Le tube 25 s'étend axialement à l'intérieur du godet 11 en étant entouré par la partie centrale 27 de la paroi souple 14, laquelle paroi souple est appliquée localement en contact étanche contre la face inférieure de la plaque 16 autour du tube 25.

Le cas échéant, le tube 25 peut également se prolonger vers l'intérieur de la chambre de travail A, par une collerette 25a. Cette collerette 25a peut avantageusement présenter une longueur axiale très inférieure à la longueur axiale totale du tube 25, par exemple inférieure au dixième de la longueur axiale totale du tube 25, de sorte que le deuxième passage étranglé D est majoritairement situé à l'intérieur du godet 11.

Ces dispositions permettent une grande compacité du support antivibratoire S selon l'axe central Z et un faible poids, et ce sans dégradation des performances antivibratoires du support.

Enfin, le raccord pneumatique 8 communique avec une vanne à trois voies 28 qui est adaptée pour faire communiquer la chambre pneumatique P soit avec une source de dépression 29 (DEP.) prévue dans le véhicule (pompe à vide, éventuellement circuit de vide utilisé pour l'assistance de freinage du véhicule, ou autre), soit avec l'atmosphère.

La vanne à trois voies 28 peut être constituée avantageusement par une électrovanne commandée par un circuit électronique de commande 30 (CALC.) tel que par exemple le calculateur de bord du véhicule, lui-même raccordé à un capteur 31 (RPM) donnant le régime du moteur.

Ainsi, lorsque le moteur du véhicule fonctionne au ralenti, c'est-à-dire lorsque le capteur 31 indique un régime inférieur à une limite prédéterminée correspondant par exemple à une fréquence de vibrations comprise entre 20 et 100 Hz, le circuit de commande 30 actionne la vanne 28 pour qu'elle fasse communiquer la chambre pneumatique P avec l'atmosphère, comme représenté sur la figure 2.

Dans ce mode de fonctionnement, les vibrations du moteur M sont transmises à la chambre de travail A par le corps en élastomère 5, ce qui provoque des fluctuations de volume de ladite chambre de travail qui sont absorbées par les déformations de la chambre hydraulique supplémentaire E : compte tenu de la fréquence de résonance du deuxième passage étranglé D qui correspond sensiblement à la fréquence des vibrations émises par le moteur au ralenti, ledit passage étranglé D est alors le siège de phénomènes de résonance qui permettent de filtrer efficacement les vibrations du moteur.

Dans ce régime, il est également possible de commander la vanne 28 de façon qu'elle mette alternativement la chambre pneumatique en dépression et à la pression atmosphérique, de façon à générer des contre-vibrations aptes à réduire l'effet des vibrations du moteur.

En revanche, dans des conditions prédéterminées correspondant par exemple au roulage du véhicule, c'est-à-dire notamment pour un régime moteur supérieur à ladite limite prédéterminée, le circuit de commande 26 actionne de préférence la vanne 28 de façon que la chambre pneumatique P communique en permanence avec la source de dépression 29, de sorte que la poche souple 27 est alors maintenue appliquée contre la surface intérieure du godet 11.

Dans ce mode de fonctionnement, tout se passe comme si la chambre hydraulique supplémentaire E n'existait plus, et le support antivibratoire fonctionne de façon classique en amortissant les vibrations de faible fréquence (par exemple inférieure à 20 Hz) et de grande amplitude (par exemple, supérieure à 1 mm) par les transferts de liquide entre les chambres de compensation A et B à travers le passage étranglé C.

## Revendications

1. Support antivibratoire hydraulique destiné à être interposé aux fins d'amortissement entre des premier et deuxième éléments rigides, ce support antivibratoire comprenant:
- des première et deuxième armatures (1, 3) destinées à être fixées aux deux éléments rigides,
- une cloison rigide (13) comprenant au moins une plaque (16),
- un corps en élastomère (5) qui relie entre elles les deux armatures (1, 3) et qui délimite, avec la cloison (13), une chambre de travail (A) remplie de liquide,
- des première et deuxième poches souples (26, 27) qui délimitent respectivement, avec ladite cloison rigide (13), une chambre de compensation (B) et une chambre hydraulique supplémentaire (E) adjacentes remplies de liquides, la chambre de compensation (B) étant reliée à la chambre de travail (A) par un premier passage étranglé (C) rempli de liquide qui présente une première fréquence de résonance inférieure à 20 Hz, et la chambre hydraulique supplémentaire (E) étant reliée à la chambre de travail (A) par un deuxième passage étranglé (D) qui présente une deuxième fréquence de résonance comprise entre 20 et 80 Hz,
- et un godet (11) délimitant, avec ladite cloison (13), une chambre pneumatique (P) formée autour de la deuxième poche (27) de la paroi souple en élastomère,
**caractérisé en ce que** ladite plaque (16) est solidaire d'un tube (25) s'étendant à l'intérieur de la deuxième poche souple (27) et délimitant le deuxième passage étranglé (D), ledit tube (25) étant entouré radialement par une paroi latérale (12) du godet, une partie de la deuxième poche (27) étant comprise entre le tube (25) et ladite paroi latérale (12).

2. Support antivibratoire selon la revendication 1, dans lequel la cloison comporte en outre une coque annulaire (15) qui présente une gorge (17) délimitant le premier passage étranglé (C) et fermée par ladite plaque (16) vers la chambre de travail (A).

3. Support antivibratoire selon la revendication 2, dans lequel la chambre de compensation (B) est disposée, au moins partiellement, radialement entre le godet (11) et la coque annulaire (15).

4. Support antivibratoire selon l'une quelconque des revendications précédentes, dans lequel les première et deuxième poches souples (26, 27) sont formées dans une même paroi souple (14) et la paroi latérale (12) du godet est en appui contre la paroi souple (14) et applique localement cette paroi souple contre la cloison rigide (13) en séparant ainsi la chambre de compensation (B) et la chambre hydraulique supplémentaire (E).

5. Support antivibratoire selon la revendication 4, dans lequel le godet (11) applique la paroi souple (14) contre la plaque (16) autour du tube (25).

6. Support antivibratoire selon l'une quelconque des revendications précédentes, dans lequel le tube (25) est formé d'une seule pièce avec la plaque (16).

7. Support antivibratoire selon la revendication 6, dans lequel le tube (25) et la plaque (16) sont formés en matière plastique.

8. Support antivibratoire hydraulique selon l'une quelconque des revendications précédentes, dans lequel le tube (25) se prolonge à l'intérieur de la chambre de travail (A).

9. Support antivibratoire selon la revendication 8, dans lequel le tube (25) se prolonge à l'intérieur de la chambre de travail (A) en formant une collerette (25a) dans ladite chambre de travail, ladite collerette présentant une longueur axiale inférieure au dixième de la longueur axiale totale du tube (25).

10. Support antivibratoire selon l'une quelconque des revendications précédentes, dans lequel le deuxième passage étranglé (D) est majoritairement disposé à l'intérieur du godet (11).

11. Support antivibratoire selon l'une quelconque des revendications précédentes, dans lequel ladite plaque (16) est plane.

12. Support antivibratoire selon l'une quelconque des revendications précédentes, dans lequel le godet (11) est formé d'une seule pièce avec un couvercle rigide (6) qui recouvre ladite paroi souple (14).

13. Support antivibratoire selon l'une quelconque des revendications précédentes, dans lequel le deuxième passage étranglé (D) s'étend sensiblement parallèlement à un axe central (Z) perpendiculaire à la plaque (16).

14. Support antivibratoire selon l'une quelconque des revendications précédentes, dans lequel la chambre pneumatique (P) est reliée à l'extérieur par un passage d'air (8).

## Claims

1. A hydraulic vibration-damping support designed to be interposed for vibration-damping purposes between first and second rigid elements, said vibration-damping support comprising:
- first and second strength members (1, 3) serving to be fastened to the two rigid elements;
- a rigid partition (13) comprising at least one plate (16);
- an elastomer body (5) which connects the two strength members (1, 3) together and which co-operates with the partition (13) to define a working chamber (A) filled with liquid;
- first and second flexible pouches (26, 27) which co-operate with said rigid partition (13) to define respectively a compensation chamber (B) and an additional hydraulic chamber (E), which chambers are adjacent and liquid-filled, the compensation chamber (B) being connected to the working chamber (A) via a first constricted passageway (C) filled with liquid and that has a first resonant frequency of less than 20 Hz, and the additional hydraulic chamber (E) being connected to the working chamber (A) via a second constricted passageway (D) that has a second resonant frequency lying in the range 20 Hz to 80 Hz; and
- a cup (11) co-operating with said partition (13) to define a pneumatic chamber (P) formed around the second pouch (27) of the flexible wall made of elastomer;
said vibration-damping support being **characterized in that** said plate (16) is secured to a tube (25) that extends inside the second flexible pouch (27) and defines the second constricted passageway (D), said tube (25) being surrounded radially by a side wall (12) of the cup, a portion of the second pouch (27) lying between the tube (25) and said side wall (12).

2. A vibration-damping support according to claim 1, in which the partition further comprises an annular shell (15) that has a groove (17) defining the first constricted passageway (C) and closed by said plate (16) towards the working chamber (A).

3. A vibration-damping support according to claim 2, in which the compensation chamber (B) is disposed, at least in part, radially between the cup (11) and the annular shell (15).

4. A vibration-damping support according to any preceding claim, in which the first and second flexible pouches (26, 27) are formed in the same flexible wall (14) and the side wall (12) of the cup bears against the flexible wall (14) and that locally presses said flexible wall against the rigid partition (13), thereby separating the compensation chamber (B) from the additional hydraulic chamber (E).

5. A vibration-damping support according to claim 4, in which the cup (11) presses the flexible wall (14) against the plate (16) around the tube (25).

6. A vibration-damping support according to any preceding claim, in which the tube (25) is formed integrally with the plate (16).

7. A vibration-damping support according to claim 6, in which the tube (25) and the plate (16) are made of plastics material.

8. A hydraulic vibration-damping support according to any preceding claim, in which the tube (25) is extended inside the working chamber (A).

9. A vibration-damping support according to claim 8, in which the tube (25) is extended inside the working chamber (A) by forming a collar (25a) in said working chamber, said collar having an axial length that is less than one tenth of the total axial length of the tube (25).

10. A vibration-damping support according to any preceding claim, in which the second constricted passageway (D) is mainly disposed inside the cup (11).

11. A vibration-damping support according to any preceding claim, in which said plate (16) is plane.

12. A vibration-damping support according to any preceding claim, in which the cup (11) is formed integrally with a rigid cover (6) that covers said flexible wall (14).

13. A vibration-damping support according to any preceding claim, in which the second constricted passageway (D) extends substantially parallel to a central axis (Z) that is perpendicular to the plate (16).

14. A vibration-damping support according to any preceding claim, in which the pneumatic chamber (P) is connected to the outside via a vent passageway (8).

## Patentansprüche

1. Hydraulisches schwingungsdämpfendes Lager, welches dazu bestimmt ist, zur Dämpfung zwischen erste und zweite starre Elemente angeordnet zu werden, wobei dieses schwingungsdämpfende Lager aufweist:
- erste und zweite Armaturen (1, 3), welche dazu bestimmt sind, an den zwei starren Elementen befestigt zu werden,
- eine starre Trennwand (13) mit mindestens einer Platte (16),
- einen Elastomerkörper (5), welcher die beiden Armaturen (1, 3) miteinander verbindet und mit der Trennwand (13) eine mit Flüssigkeit gefüllte Arbeitskammer (A) begrenzt,
- erste und zweite flexible Taschen (26, 27), die jeweils mit der starren Trennwand (13) eine Ausgleichskammer (B) und eine zusätzliche hydraulische Kammer (E) begrenzen, die aneinander angrenzen und mit Flüssigkeiten gefüllt sind, wobei die Ausgleichskammer (B) mit der Arbeitskammer (A) über einen ersten, mit Flüssigkeit gefüllten verengten Durchgang (C) verbunden ist, der eine erste Resonanzfrequenz von weniger als 20 Hz aufweist, und die zusätzliche hydraulische Kammer (E) mit der Arbeitskammer (A) über einen zweiten verengten Durchgang (D) verbunden ist, der eine zweite Resonanzfrequenz zwischen 20 und 80 Hz aufweist, , und
- einen Topf (11), der mit der Trennwand (13) eine pneumatische Kammer (P) begrenzt, die um die zweite Tasche (27) der flexiblen Elastomerwand gebildet ist,
**dadurch gekennzeichnet, dass** die Platte (16) mit einem Rohr (25) ist, das sich ins Innere der zweiten flexiblen Tasche (27) erstreckt und den zweiten verengten Durchgang (D) begrenzt, wobei das Rohr (25) radial von einer Seitenwand (12) des Topfs umgeben ist, und ein Teil der zweiten Tasche (27) zwischen dem Rohr (25) und der Seitenwand (12) angeordnet ist.

2. Schwingungsdämpfendes Lager nach Anspruch 1, bei dem die Trennwand ferner eine ringförmige Schale (15) aufweist, die eine den ersten verengten Durchgang (C) begrenzende Kehle (17) aufweist und durch die Platte (16) in Richtung zur Arbeitskammer (A) verschlossen ist.

3. Schwingungsdämpfendes Lager nach Anspruch 2, bei dem die Ausgleichskammer (B) zumindest teilweise radial zwischen dem Topf (11) und der ringförmigen Schale (15) angeordnet ist.

4. Schwingungsdämpfendes Lager nach einem der vorhergehenden Ansprüche, bei dem die ersten und zweiten flexiblen Taschen (26, 27) in einer selben flexiblen Wand (14) ausgebildet sind und die Seitenwand (12) des Topfs gegen die flexible Wand (14) abgestützt ist und diese flexible Wand lokal gegen die starre Trennwand (13) anlegt und dabei somit die Ausgleichskammer (B) und die zusätzliche hydraulische Kammer (E) trennt.

5. Schwingungsdämpfendes Lager nach Anspruch 4, bei dem der Topf (11) die flexible Wand (14) gegen die Platte (16) um das Rohr (25) anlegt.

6. Schwingungsdämpfendes Lager nach einem der vorhergehenden Ansprüche, bei dem das Rohr (25) einstückig mit der Platte (16) ausgebildet ist.

7. Schwingungsdämpfendes Lager nach Anspruch 6, bei dem das Rohr (25) und die Platte (16) aus Kunststoff gebildet sind.

8. Schwingungsdämpfendes Lager nach einem der vorhergehenden Ansprüche, bei dem das Rohr (25) sich ins Innere der Arbeitskammer (A) fortsetzt.

9. Schwingungsdämpfendes Lager nach Anspruch 8, bei dem das Rohr (25) sich unter Ausbilden eines Bunds (25a) ins Innere der Arbeitskammer (A) fortsetzt, wobei der Bund eine axiale Länge aufweist, die geringer ist als ein Zehntel der axialen Gesamtlänge des Rohrs (25).

10. Schwingungsdämpfendes Lager nach einem der vorhergehenden Ansprüche, bei dem der zweite verengte Durchgang (D) mehrheitlich im Inneren des Topfs (11) angeordnet ist.

11. Schwingungsdämpfendes Lager nach einem der vorhergehenden Ansprüche, bei dem die Platte (16) eben ist.

12. Schwingungsdämpfendes Lager nach einem der vorhergehenden Ansprüche, bei dem der Topf (11) einstückig mit einem starren Deckel (6) gebildet ist, der die flexible Wand (14) bedeckt.

13. Schwingungsdämpfendes Lager nach einem der vorhergehenden Ansprüche, bei dem sich der zweite verengte Durchgang (D) im Wesentlichen parallel zu einer zentralen, senkrecht zu der Platte (16) verlaufenden Achse (Z) erstreckt.

14. Schwingungsdämpfendes Lager nach einem der vorhergehenden Ansprüche, bei dem die pneumatische Kammer (P) mit der Umgebung über einen Luftdurchgang (8) verbunden ist.
